# EUROPEAN PATENT SPECIFICATION

(11) **EP 3 730 115 B1**
(45) Date of publication and mention of the grant of the patent: **08.10.2025**
(21) Application number: 19215360.9
(22) Date of filing: 11.12.2019
(51) Int. Cl.: A61G 5/04, F16H 21/44, F16H 25/20, A61G 5/10

(54) **AN ELECTRIC LIFTING MECHANISM FOR WHEELCHAIR ELECTRIC VEHICLE HEAD WITH A SAFETY DEVICE**
ELEKTRISCHER HEBEMECHANISMUS FÜR EINEN ELEKTROFAHRZEUGKOPF EINES ROLLSTUHLS MIT EINER SICHERHEITSVORRICHTUNG
MÉCANISME DE LEVAGE ÉLECTRIQUE POUR TÊTE DE FAUTEUIL ROULANT ÉLECTRIQUE DOTÉ D'UN DISPOSITIF DE SÉCURITÉ

(30) Priority: 23.04.2019 CN 201910328768
(43) Date of publication of application: 28.10.2020
(73) Proprietor: MBL (Xiamen) Co. Ltd., Haicang, Xiamen 361022 (CN)
(72) Inventor: Nielsen, Niels Grostol, Xiamen, 361022 (CN)
(74) Representative: Wroblewski, Marcin Jan

(56) References cited:
- EP-A1- 0 811 459
- DE-A1- 19 718 762
- US-A1- 2016 249 521
- US-A1- 2018 140 486

## Description

### Technical field

The invention relates to an electric lifting mechanism with a safety device for an electric head of a wheelchair.

### Background technology

A patent application US2018140486A1 discloses a wheelchair electric mobility attachment with a lifting mechanism wherein the lifting mechanism comprises a linear actuator, a lifting arm, and a lifting arm connector. The linear actuator is connected to the body of the wheelchair electric mobility attachment and to the lifting arm. The lifting arm is connected to the lifting arm connector fixed rotatably to the body of the wheelchair electric mobility attachment.

The existing clamping mechanisms of the connecting part of an electric head of a wheelchair and a wheelchair mostly use a bolt connecting clamping block to fix the electric wheelchair head and wheelchair. For some of clamping mechanisms using an electric push rod as the driving part, their size is large in order to increase the swing angle.

The object of the present invention is to provide a reduced-size electric lifting mechanism with increased swing angle of its swing arm.

### Summary of the invention

The above object of the invention is achieved by the technical solution in a form of an electric lifting mechanism for an electric head of a wheelchair comprising an electric push rod, a first connecting rod, and a swing arm. Said mechanism further comprises a connecting block, and a second connecting rod. An upper end of the electric push rod is hinged on the upper end of the connecting block, the pushing end part of the electric push rod is respectively hinged with the upper end of the first connecting rod and the second connecting rod, the lower end of the first connecting rod is hinged with the middle part of the connecting block, the lower end of the second connecting rod is hinged with the upper part of the swing arm, the upper end of the swing arm is hinged in the middle of the connecting block, and the hinge point of the swing arm and the connecting block is located above the hinge point of the upper part of the swing arm and the lower end of the second connecting rod. Said mechanism further comprises a safety device.

The safety device comprises at least one locking nut and a locking bolt wherein the middle part of the locking bolt is transversely disposed and fixed at the lower end of the connecting block, the two ends of the locking bolt protrude out of the connecting block, at least one of the two protruding ends of the locking bolt is connected to the locking nut and the bottom surface of the locking nut have circular chamfers. The lower end of the swing arm has a section of the inclined surface and the chamfer on the bottom surface of the locking nut abuts against the inclined surface of the lower end of the swing arm to lock the swing arm.

Preferably, the safety device comprises two locking nuts and the two protruding ends of the locking bolt are respectively connected with the locking nuts.

After adopting the above scheme, the invention comprises a connecting block, an electric push rod, a first connecting rod, a second connecting rod and a swing arm. The first connecting rod, the second connecting rod and the swing arm constitute a group of connecting rod mechanisms, which can greatly increase the swing angle of the swing arm and has the advantages of small size and small mechanism. In addition, the invention is provided with locking nuts, which can be propped against the swing arm to lock the swing arm.

The invention will be further described in combination with the attached drawings and specific embodiments.

### Brief description of drawings

Fig. 1 is an axonometric view of the locking state of the invention;
Fig. 2 is an axonometric view of the half range state of the invention;
Fig. 3 is an axonometric view of the release state of the invention;
Fig. 4 is a side view of the invention;
Fig. 5 is a front view of the invention;
Fig. 6 is a cross-sectional view of Fig. 5 along A-A line;
Fig. 7 is a view of the invention in a locked state;
Fig. 8 is a view of the invention in a released state.

### Detailed description of the invention

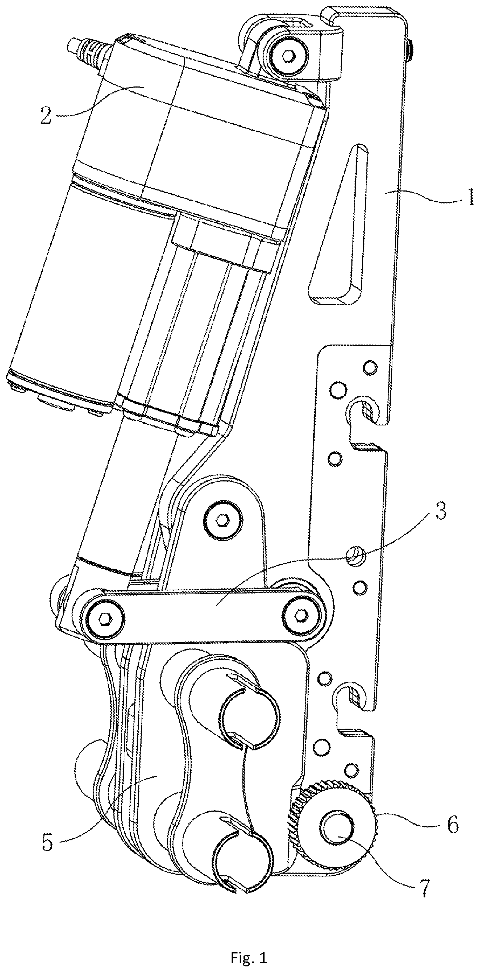

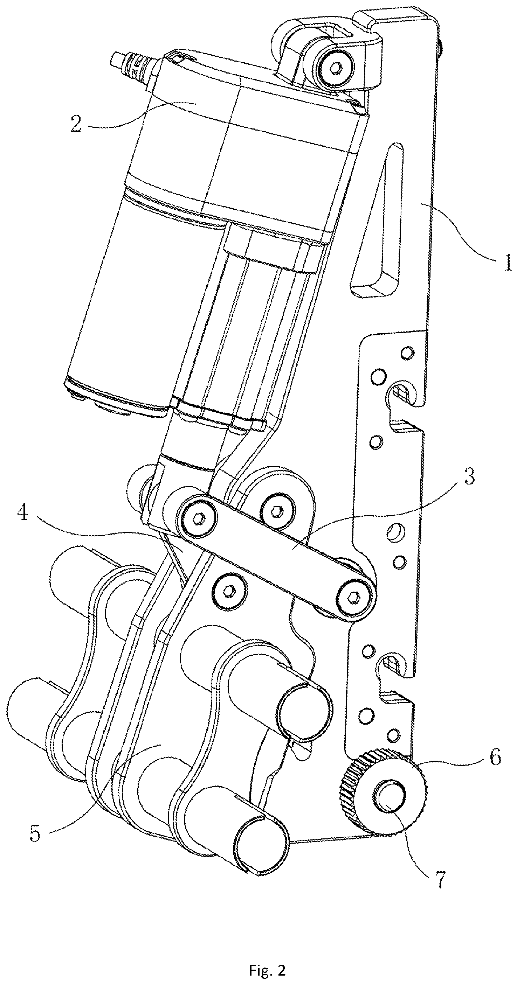

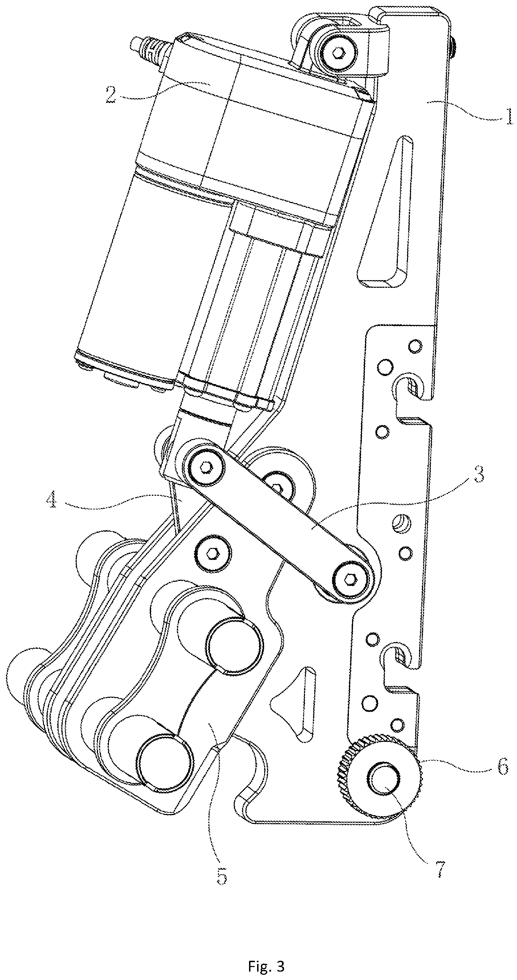

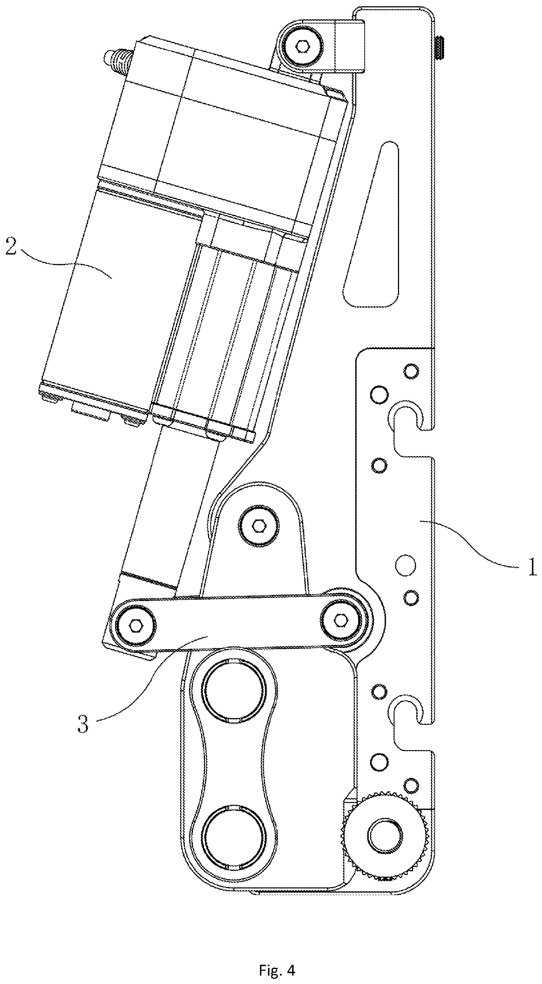

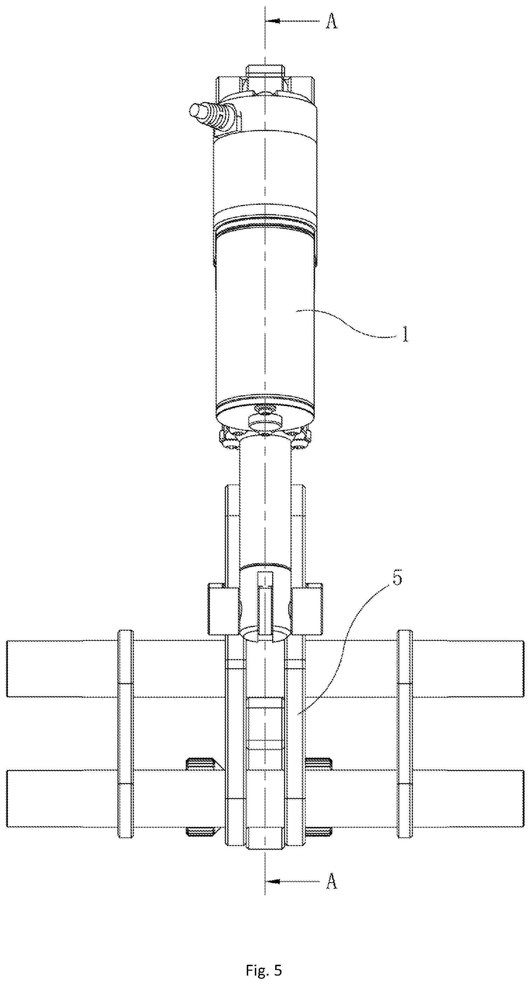

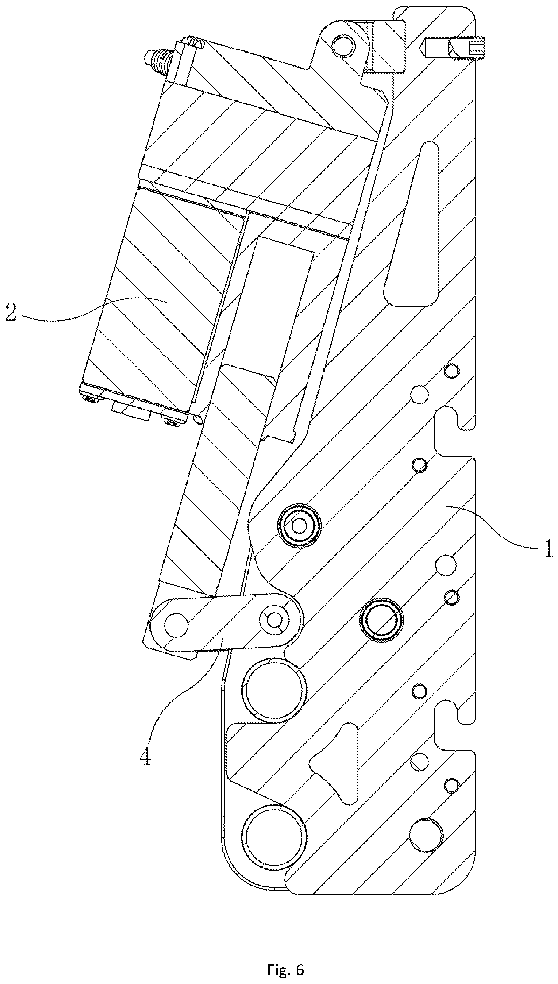

As shown in Fig. 1-fig. 6, the invention is an electric lifting mechanism with a safety device for an electric head of a wheelchair comprising a connecting block 1, an electric push rod 2, a first connecting rod 3, a second connecting rod 4, a swing arm 5, two locking nuts 6 and a locking bolt 7.

The upper end of the electric push rod 2 is hinged at the upper end of the connecting block 1, the pushing end part of the electric push rod 2 is hinged with the upper end of the first connecting rod 3 and the second connecting rod 4, the lower end of the first connecting rod 3 is hinged with the middle part of the connecting block 1, the lower end of the second connecting rod 4 is hinged with the upper part of the swing arm 5, the upper end of the swing arm 5 is hinged in the middle part of the connecting block 1, the hinge point of the swing arm 5 and the connecting block 1 is located at the upper part of the swing arm 5 above the hinge point of the upper part of the swing arm 5 and the lower end of the second connecting rod 4.

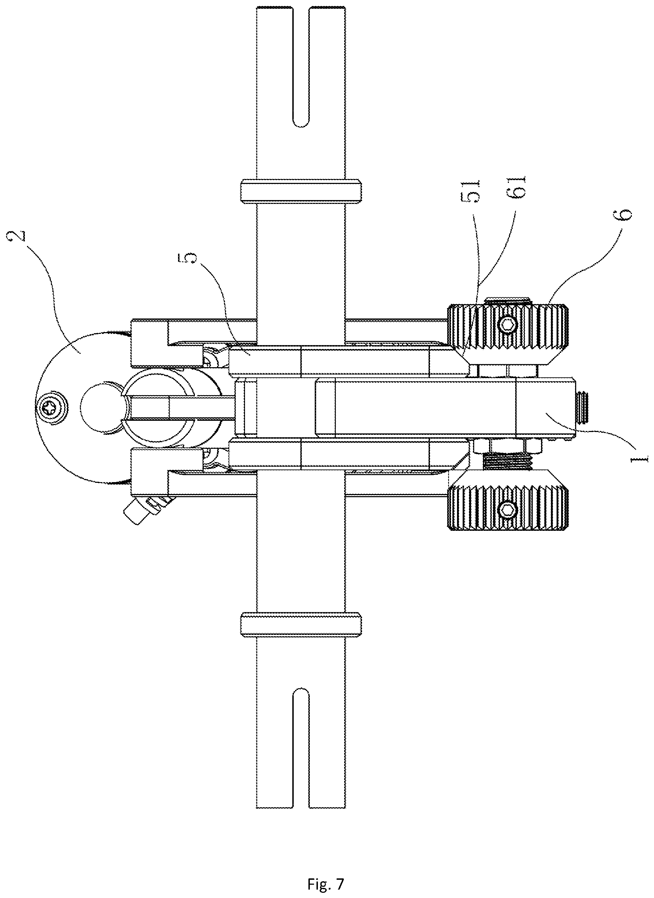

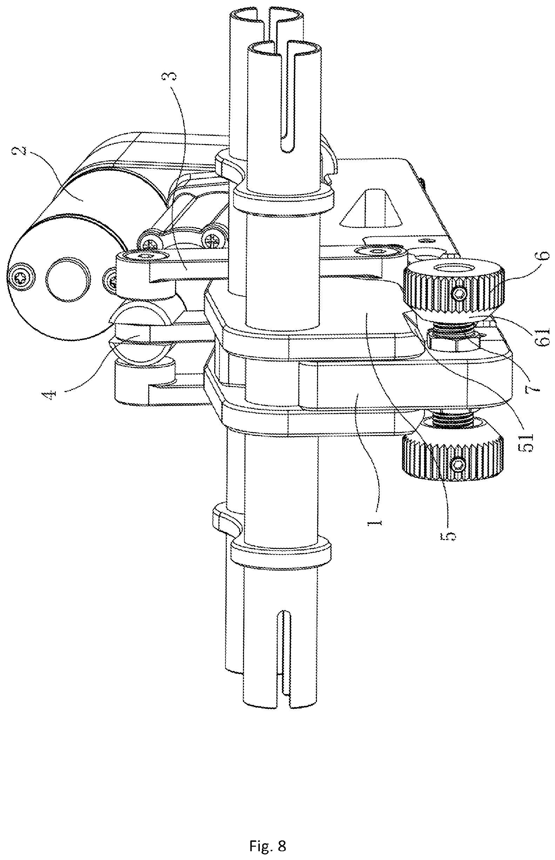

As shown in Figure 7-8, the middle part of the locking bolt 7 is transversely disposed and fixed at the lower end of the connecting block 1, the two ends of the locking bolt 7 protrude out of the connecting block 1 and two locking nuts 6 are respectively screwed at the two protruding ends of the locking bolt 7, the bottom surfaces of the locking nuts 6 are provided with circular chamfers 61, the lower end of the swing arm 5 is provided with a section of the inclined surface 51 and the chamfer 61 on the bottom surface of the locking nut 6 abuts against the inclined surface 51 of the lower end of the swing arm 5 to lock the swing arm 5.

The working principle of the invention:
As shown in Fig. 1-fig. 3, when releasing, the locking nut 6 is rotated outwards to disengage the locking nut 6 from the swing arm 5; the push rod on the electric push rod 2 shrinks inwardly to drive the first connecting rod 3 and the second connecting rod 4 to swing upward, and the second connecting rod 4 drives the swing arm 5 to swing upward, so that the invention is in a released state.

The above is only a preferred embodiment of the invention and thus the scope of the present invention is not limited thereto. That is to say, modifications made in accordance with the scope of the claims shall still be within the scope of the patent for the invention.

## Claims

1. An electric lifting mechanism for an electric head of a wheelchair comprising an electric push rod (2), a first connecting rod (3), and a swing arm (5),
**characterized in that** it further comprises a connecting block (1), and a second connecting rod (4) wherein:
- the upper end of the electric push rod (2) is hinged on the upper end of the connecting block (1);
- the pushing end part of the electric push rod (2) is hinged with the upper end of the first connecting rod (3) and the second connecting rod (4) respectively;
- the lower end of the first connecting rod (3) is hinged with the middle part of the connecting block (1);
- the lower end of the second connecting rod (4) is hinged with the upper part of the swing arm (5);
- the upper end of the swing arm (5) is hinged in the middle of the connecting block (1); and
- the hinge point of the swing arm (5) and the connecting block (1) is located above the hinge point of the upper part of the swing arm (5) and the lower end of the second connecting rod (4)
wherein it further comprises a safety device.

2. The electric lifting mechanism according to claim 1, **characterized in that** the safety device comprises at least one locking nut (6) and a locking bolt (7) wherein;
- the middle part of the locking bolt (7) is transversely disposed and fixed at the lower end of the connecting block (1);
- the two ends of the locking bolt (7) protrude out of the connecting block (1);
- at least one of the two protruding ends of the locking bolt (7) is connected with the locking nut (6);
- the bottom surface of the locking nuts (6) has circular chamfers (61);
- the lower end of the swing arm (5) has a section of the inclined surface (51), and
- the chamfer (61) on the bottom surface of the locking nut (6) abuts against the inclined surface (51) of the lower end of the swing arm (5) to lock the swing arm (5).

## Patentansprüche

1. Ein elektrischer Hebemechanismus für einen elektrischen Kopf eines Rollstuhls, umfassend eine elektrische Schubstange (2), eine erste Verbindungsstange (3) und einen Schwenkarm (5),
**dadurch gekennzeichnet, dass** er weiterhin einen Verbindungsblock (1) und eine zweite Verbindungsstange (4) umfasst, wobei:
- das obere Ende der elektrischen Schubstange (2) am oberen Ende des Verbindungsblocks (1) angelenkt ist;
- das Schubende der elektrischen Schubstange (2) jeweils mit dem oberen Ende der ersten Verbindungsstange (3) und der zweiten Verbindungsstange (4) angelenkt ist;
- das untere Ende der ersten Verbindungsstange (3) mit dem mittleren Teil des Verbindungsblocks (1) angelenkt ist;
- das untere Ende der zweiten Verbindungsstange (4) mit dem oberen Teil des Schwenkarms (5) angelenkt ist;
- das obere Ende des Schwenkarms (5) in der Mitte des Verbindungsblocks (1) angelenkt ist;
und
- der Gelenkpunkt des Schwenkarms (5) und des Verbindungsblocks (1) oberhalb des Gelenkpunktes zwischen dem oberen Teil des Schwenkarms (5) und dem unteren Ende der zweiten Verbindungsstange (4) angeordnet ist.
wobei er weiterhin eine Sicherheitsvorrichtung umfasst.

2. Der elektrische Hebemechanismus nach Anspruch 1, **dadurch gekennzeichnet, dass** die Sicherheitsvorrichtung mindestens eine Sicherungsmutter (6) und einen Verriegelungsbolzen (7) umfasst, wobei
- der mittlere Teil des Verriegelungsbolzens (7) quer angeordnet und am unteren Ende des Verbindungsblocks (1) befestigt ist,
- die beiden Enden des Verriegelungsbolzens (7) aus dem Verbindungsblock (1) herausragen,
- mindestens eines der beiden herausragenden Enden des Verriegelungsbolzens (7) mit der Sicherungsmutter (6) verbunden ist,
- die Unterseite der Sicherungsmutter (6) kreisförmige Fasen (61) aufweist,
- das untere Ende des Schwenkarms (5) einen Abschnitt der geneigten Fläche (51) aufweist,
und
- die Fase (61) an der Unterseite der Sicherungsmutter (6) an der geneigten Fläche (51) des unteren Endes des Schwenkarms (5) stößt, um den Schwenkarm (5) zu verriegeln.

## Revendications

1. Mécanisme de levage électrique pour une tête électrique d'un fauteuil roulant comprenant une tige de poussée électrique (2), une première bielle (3) et un bras oscillant (5), **caractérisé en ce qu'**il comprend en outre un bloc de liaison (1) et une deuxième bielle (4), dans lequel :
- l'extrémité supérieure de la tige de poussée électrique (2) est articulée sur l'extrémité supérieure du bloc de liaison (1) ;
- la partie d'extrémité de poussée de la tige de poussée électrique (2) est articulée respectivement avec l'extrémité supérieure de la première tige de liaison (3) et de la deuxième tige de liaison (4) ;
- l'extrémité inférieure de la première tige de liaison (3) est articulée avec la partie centrale du bloc de liaison (1) ;
- l'extrémité inférieure de la deuxième tige de liaison (4) est articulée avec la partie supérieure du bras oscillant (5) ;
- l'extrémité supérieure du bras oscillant (5) est articulée au milieu du bloc de liaison (1) ; et
- le point d'articulation du bras oscillant (5) et du bloc de liaison (1) est situé au-dessus du point d'articulation de la partie supérieure du bras oscillant (5) et de l'extrémité inférieure de la deuxième tige de liaison (4)
lequel comprend en outre un dispositif de sécurité.

2. Le mécanisme de levage électrique selon la revendication 1, **caractérisé en ce que** le dispositif de sécurité comprend au moins un écrou de blocage (6) et un boulon de blocage (7), dans lequel :
- la partie centrale du boulon de blocage (7) est disposée transversalement et fixée à l'extrémité inférieure du bloc de liaison (1) ;
- les deux extrémités du boulon de blocage (7) dépassent du bloc de liaison (1) ;
- au moins l'une des deux extrémités saillantes du boulon de blocage (7) est reliée à l'écrou de blocage (6) ;
- la surface inférieure des écrous de blocage (6) comporte des chanfreins circulaires (61) ;
- l'extrémité inférieure du bras oscillant (5) comporte une partie de la surface inclinée (51), et
- le chanfrein (61) sur la surface inférieure de l'écrou de blocage (6) vient en butée contre la surface inclinée (51) de l'extrémité inférieure du bras oscillant (5) afin de bloquer le bras oscillant (5).
